Europäisches Patentamt

European Patent Office

Office européen des brevets

(19)

(11) Numéro de publication: **0 048 647**
**B1** .

## (12) FASCICULE DE BREVET EUROPEEN

(45) Date de publication du fascicule du brevet:
**10.10.84**

(21) Numéro de dépôt: **81401339.7**

(22) Date de dépôt: **25.08.81**

(51) Int. Cl.³: **G 06 F 11/00**, G 05 B 23/02

(54) **Dispositif adapteur électronique d'une prise diagnostic aux informations fournies par un circuit de commande électronique.**

(30) Priorité: **23.09.80 FR 8020390**

(43) Date de publication de la demande:
**31.03.82 Bulletin 82/13**

(45) Mention de la délivrance du brevet:
**10.10.84 Bulletin 84/41**

(84) Etats contractants désignés:
**BE DE GB IT NL SE**

(56) Documents cités:
**FR - A - 2 343 379**

(73) Titulaire: **RENIX ELECTRONIQUE S.A., Avenue du Mirail,
F-31036 Toulouse (FR)**

(72) Inventeur: **Laporte, Alain, Route du Muret,
F-31120 Villate (FR)**

(74) Mandataire: **Colas, Jean-Pierre, Régie Nationale des
Usines RENAULT 8 et 10 Avenue Emile Zola,
F-92109 Boulogne-Billancourt (FR)**

BUNDESDRUCKEREI BERLIN

## Description

La présente invention est relative à un dispositif adaptateur électronique d'une prise diagnostic aux informations fournies par un circuit de commande électronique.

Quand on utilise un circuit de commande électronique faisant usage notamment d'un microcalculateur, il est courant d'associer une prise diagnostic aux circuits de sortie en vue d'obtenir d'une manière commode les informations nécessaires au diagnostic du système. L'allumage d'un voyant avertit l'utilisateur qu'un défaut s'est produit dans le circuit électronique de commande ou dans ses périphériques d'entrée ou de sortie.

Plus particulièrement, l'invention vise à réaliser un dispositif qui permette de:

— signaler qu'un défaut existe dans les périphériques d'un circuit de commande comportant un microcalculateur (par exemple, si un défaut de capteur vitesse existe dans un circuit de commande d'un moteur de véhicule automobile);
— signaler qu'un défaut existe dans le circuit de commande lui-même;
— identifier le défaut au moyen des informations émises par le microcalculateur et permettre la connexion simple (sans problème de protection) d'un dispositif de lecture du diagnostic.

La demande de brevet FR-A-2 343 379 apporte une solution à ce problème au moyen d'un équipement comportant des moyens pour signaler un défaut dans les périphériques d'un circuit de commande comprenant un microcalculateur, des moyens pour signaler un défaut dans le circuit de commande comme l'absence de signaux de pilotage, une unité pour recevoir les signaux de défaut et adaptée pour être connectée à une unité de diagnostic et un voyant de signalisation de défaut.

Toutefois, la réalisation d'une prise diagnostic telle qu'elle est conçue dans cette demande de brevet conduit à un dispositif complexe et onéreux du fait du grand nombre de conducteurs qui y aboutissent et des problèmes de protection liés à chacun de ces conducteurs qui conduisent à la réalisation d'interfaces complexes et coûteuses.

Suivant l'invention, ces inconvénients sont évités au moyen d'un dispositif tel que défini dans la revendication 1 grâce au fait que les informations de diagnostic peuvent être recueillies sur une borne unique protégée par le circuit d'allumage et de protection du voyant et sur laquelle les signaux de défaut des circuits périphériques sont disponibles sous forme série, tandis qu'un défaut du microcalculateur interdit la transmission de ces signaux série et est identifié sur la borne de diagnostic par la présence d'un signal continu.

Suivant un primièr mode de réalisation ledit dispositif adaptateur électronique comprend un premier transistor connecté: par sa base d'une part à la sortie dudit circuit de surveillance, d'autre part à ladite seconde broche de sortie, par son émetteur à la masse et par son collecteur audit voyant par l'intermédiaire d'une première résistance de fourniture d'un courant de pilotage à un circuit DARLINGTON en parallèle par ses sorties sur ledit voyant.

Avantageusement, la sortie dudit circuit de surveillance est connectée à la base dudit premier transistor par l'intermédiaire d'une seconde résistance fournissant le courant de commande dudit transistor et d'une diode de protection.

Suivant une seconce mode de réalisation, l'émetteur du circuit DARLINGTON est à la masse par l'intermédiaire d'une troisième résistance et ukn second transistor est connecté: par son collecteur d'une part au collecteur du premier transistor, d'autre part à la base du circuit DARLINGTON, par son émetteur à la masse et par sa base au point commun à l'émetteur du circuit DARLINGTON et à ladite troisième résistance.

Suivant une troisième mode de réalisation, un condensateur assurant la stabilité de la sortie du circuit adaptateur est connecté entre les collecteurs dudit second transistor et dudit circuit DARLINGTON.

De cette manière, on obtient, sous forme de messages codés, les informations qui permettent aux services après-vente, le contrôle et le dépannage du système et de ses capteurs sans l'adjonction d'un connecteur ni d'une interface aussi particulière que complexe ce qui constitue une économie appréciable.

D'autres caractéristiques ressortiront de la description qui suit et qui n'est donnée qu'à titre d'exemple. A cet effet on se reportera aux dessins joints dans lesquels:
— la figure 1 est une représentation schématique d'un mode de réalisation du dispositif adaptateur électronique suivant la présente invention; et,
— la figure 2 donne un exemple des informations qui sont disponibles sous la forme de messages série sur la sortie de commande du voyant de la figure 1.

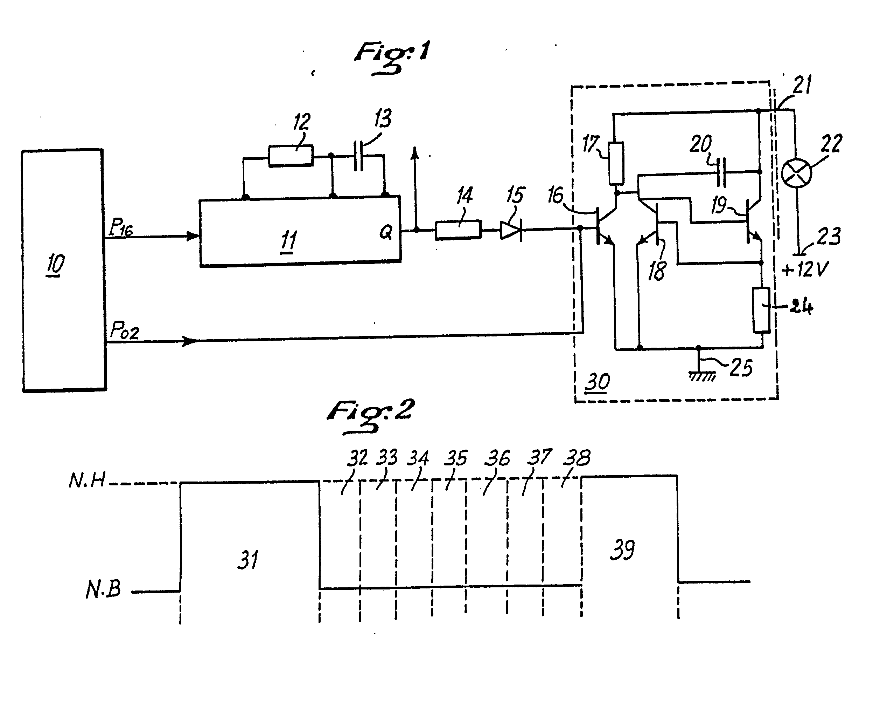

Suivant la représentation de la figure 1, un microcalculateur 10 est connecté par sa sortie $P_{16}$ à un monostable 11 connecté par sa sortie Q à la base d'un premier transistor 16 par l'intermédiaire de la connexion en série d'une résistance 14 et d'une diode de protection 15. La largeur de l'impulsion fournie par le monostable 11 est réglée au moyen d'une résistance 12 et d'un condensateur 13 comme il est connu du technicien. Une seconde sortie $P_{02}$ du microcalculateur 10 est connectée également à la base du premier transistor 16 qui constitue l'élément d'entrée d'un circuit 30 d'allumage et de protec-

2

tion qui est connecté par sa sortie 21 à la borne d'entrée d'un voyant 22 disposé par exemple sur le tableau de bord d'un véhicule automobile et dont l'autre borne 23 est mise à la tension +12 V de la batterie du véhicule.

Le circuit 30 d'allumage et de protection comprend en outre un second transistor 18 et un DARLINGTON de puissance 19. Les émetteurs des deux transistors 16 et 18 sont à la masse en 25 tandis que l'émetteur du DARLINGTON est à la masse 25 par l'intermédiaire d'une résistance 24. Le transistor 18 et ladite résistance 24, de faible valeur ohmique permettent de fixer le courant maximum circulant dans le voyant 22. De ce fait le transistor de sortie 19 est protégé contre l'application du +12 Volts au point 21 quel que soit son état: saturé ou bloqué. La combinaison du transistor 18 et de la résesance 24 dans sa base représente une limitation en courant que l'on fixe compte tenu des caractéristiques du voyant 22 et de la dissipation thermique possible sur le transistor 18 en cas d'imposition du plus batterie au point 21 quand le transistor 18 est saturé.

Le collecteur du premier transistor 16 est relié d'une part à la borne d'entrée 21 du voyant 22 par l'intermédiaire d'une résistance 17 qui conditionne la forniture d'un courant de base, donc de pilotage au DARLINGTON 19, d'autre part au collecteur du DARLINGTON 19 par l'intermédiaire d'un condensateur 20 qui assure la stabilité de la sortie, d'autre part encore à la base du DARLINGTON 19 et enfin au collecteur du second transistor 18. Le collecteur du transistor 18 est donc relié d'une part à la résistance 17 et au condensateur 20, d'autre part à la base du DARLINGTON 19 et le collecteur du DARLINGTON 19 est connecté au point 21 qui est à la fois le point de sortie du circuit 30 et la borne d'entrée du voyant 22 comme on l'a déjà dit.

## Le système fonctionne comme suit

Le voyant 22 peut être par exemple le voyant défaut d'un système électronique dont le microcalculateur 10 n'est qu'une partie. Le voyant 22 s'allume si le microcalculateur 10 détecte une anomalie de fonctionnement d'un des capteurs du système tels que capteur vitesse, capteur de charge, interface électrohydraulique ou si le monostable 11 vient à se désarmer, d'après le principe du »chien de garde« (watchdog en anglais) dont le pilotage est effectué périodiquement par les impulsions apparaissant sur la sortie $P_{16}$ du microcalculateur. S'il n'y a aucon défaut, le monostable 11 est réarmé. Sa sortie Q est à l'état haut.

De même la sortie $P_{02}$ est à l'état haut dans ce cas là. Il faut noter que le microcalculateur 10 est tel que sa broche $P_{02}$ n'a pas de »résistance« connectée au +5 Volts, c'est un »collecteur ouvert«. Dans ce cas là le transistor 16 est conc saturé, ce qui impose le blocage du DARLINGTON 19 car la tension sur sa base ne permet plus sa conduction.

Dès qu'un défaut est signalé par le microcalculateur 10, s broche $P_{02}$ passe à l'état bas. Le transistor 16 se bloque alors et le DARLINGTON 19 se met à conduire. Le voyant 22 est donc allumé. De même, le voyant 22 est allumé quand le monostable 11 se désarme. En effet, si le microcalculateur 10 ne pilote plus le monostable 11, la sortie Q de ce dernier passe à zéro et quel que soit l'état de la broche $P_{02}$, le transistor 16 se bloque ce qui amène le DARLINGTON 19 à sa conduction au travers d'un courant de base imposé par la résistance 17.

Le condensateur 20 assure la stabilité inconditionnelle du dispositif de régulation en courant constitué par le transistor 18 et la résistance 24.

Il garantit de ce fait, lors de la transmission des informations sur le voyant, la pureté des transitions logiques en prohibant toutes les oscillations parasites.

On voit donc que l'on peut allumer ou éteindre le voyant 22 selon la commande voulue par l'unité centrale 10 ou, selon l'état du monostable 11.

L'état du monostable 11 est l'ailleurs prioritaire.

Le but de la présente invention est de sortir sous forme de messages série les informations nécessaires à la mise qu point ou aux services après-vente sur la sortie 21 de commande du voyant 22.

Les informations sont sorties sous la forme illustrée à la figure 2. On sort ces informations au point 21 que le voyant 22 soit allumé ou éteint.

Pour cela on éteint le voyant 22 pendant 420 µs (intervalle 31) à moins qu'il ne soit déjà éteint. A la figure 2: N.H. signifie niveau haut et N.B. signifie niveau bas.

On sort ensuite au rythme de 60 µs par information, les données suivantes, dont la succession indiquée ci-après n'est fournie qu'à titre d'xemple non limitatif:

Intervalle 32:
    START: il permet de synchroniser le système de lecture des informations à décoder.
Intervalle 33:
    DEFAUT ELECTRO: au niveau haut, s'il y a un défaut électrovanne détecté par 10; au niveau bas dans les autres cas.
Intervalle 34:
    DEFAUT VITESSE: au niveau haut, si un défaut du capteur vitesse est constaté; au niveau bas dans les autres cas.

Intervalle 35:

DEFAUT CAPTEUR CHARGE: au niveau haut, si un défaut est constaté dans la mesure de la charge; au niveau bas dans les autres cas.

Intervalle 36:

FM2: représente l'état du sélecteur de vitesse.

Intervalle 37:

FM1: représente l'état du sélecteur de vitesse.

Intervalle 38:

RC: indique si la pédale est en position »Kick down« (pied à fond).

Intervalle 39:

STOP: il permet d'indiquer au système de lecture des informations précédentes la fin de la lecture de ces six informations.

On remet ensuite le voyant 22 dans l'état, allumé ou éteint, qu'il avait avant la sortie de ces informations. L'unité centrale 10 pilote la sortie de ce diagnostic avec une récurrence suffisamment lente pour que le voyant paraisse rester allumé éteint, selon l'état statistique qui lui est donné.

Il faut donc que la récurrence de sortie du diagnostic soit supérieure à celle perçue par l'oeil, bien inférieure à 50 Hz par exemple.

On peut bien entendu augmenter le nombre d'informations à sortier au point 21 et cela à condition de respecter la condition précédente.

On peut aussi commander pendant un temps court, l'allumage du voyant lors de l'initialisation du système, et cela pour vérifier le bon état du voyant. Cette commande de durée limitée est aussi effectuée par le port $P_{02}$ de l'unité centrale 10.

Si le monostable 11 vient à se désarmer du fait d'un défaut de l'unité centrale 10, le voyant 22 est allumé comme indiqué prédédemment, mais il n'y a plus de sortie des informations série au point 21 car le transistor 16 est bloqué. De même si l'alimentation 5 Volts du microcalculateur 10 vient à disparaître, le voyant 22 s'allume comme expliqué précédemment et le message série disparaît également. Pour cela, le $+12$ V du voyant 22 doit bien entendu, rester présent.

Le fait de situer le prélèvement des informations de diagnostic au point 21 que constitue la borne d'entrée du voyant 22 présente les avantages suivants:

— il permet d'enlever la prise diagnostic classique très complexe et très onéreuse;

— il permet de sortir les informations désirées sur une sortie 21 affectée à une autre utilisation sur laquelle les protections sont déjà effectuées;

— il permet de changer l'information fournie au diagnostic uniquement en changeant le programme du microcalculateur, sans toucher au circuit électronique 30;

— il permet d'augmenter le nombre d'informations à sortir sans augmenter le coût du produit;

— il permet de diminuer dans d'appréciables proportions le coût global du produit.

Le voyant 22 peut aussi être remplacé par une diode électroluminescente LED en série avec une résistance. Dans ce cas, le moyen de lecture du diagnostic est un lecteur optique placé en face de la diode électroluminescente. Cette solution optique supprime l'obligation de se connecter physiquement au boitier.

**Revendications**

1. Dispositiv adaptateur électronique d'une prise diagnostic aux informations fournies par un circuit de commande électronique du type comportant un microcalculateur (10) émettant des signaux (31—39) représentatifs de l'état de fonctionnement de circuits périphériques et un signal périodique représentatif de l'état de fonctionnement du microcalculateur, un circuit de surveillance (11—15) de l'état de fonctionnement du microcalculateur recevant ledit signal périodique, et un voyant (22) de signalisation de défauts connecté au microcalculateur (10) et à la sortie du circuit de surveillance (11—15) par l'intermédiaire d'un circuit (30) d'allumage du voyant (22) commandant l'allumage dudit voyant (22) en réponse à l'émission d'un signal représentatif d'une anomalie de fonctionnement d'un circuit périphérique ou sous la commande du circuit de surveillance (11—15) en réponse à la détection par ce dernier d'un signal représentatif d'un défaut de fonctionnement du microcalculateur, caractérisé en ce que ledit microcalculateur (10) comporte une première broche de sortie ($P_{02}$) connectée audit circuit d'allumage (30) et sur laquelle lesdits signaux (31—39) représentatifs de l'état de fonctionnement des circuits périphériques sont émis en série suivant une séquence ayant une récurrence prédéterminée telle que l'émission d'un signal de défaut dans ladite séquence provoque un allumage du voyant (22) perçu comme continu par un observateur, et une deuxième broche de sortie ($P_{16}$) connectée au circuit de surveillance (11—15) et sur laquelle le microcalculateur (10) émet ledit signal périodique, et en ce que pour protéger le circuit d'allumage le courant qui y circule est limité et en ce que la connexion de la sortie du circuit d'allumage (30) à l'entrée du voyant (22) constitue une prise de diagnostic (21) sur laquelle, en l'absence de défaut de fonctionnement du microcalculateur (10), lesdits signaux série (31—39) sont disponibles, tandis que l'allumage du voyant (22) par le circuit d'allumage (30) sous la commande du circuit de surveillance est prioritaire et interdit la transmission desdits signaux série (31—39) à la borne de diagnostic (21).

2. Dispositif adaptateur suivant la revendication 1, caractérisé en ce que ledit circuit d'allumage (30) compend un premier transistor (16) connecté: par sa base d'une part à la sortie (Q) dudit circuit de surveillance (11), d'autre part à ladite première broche de sortie (P$_{02}$), par son émetteur à la masse (25) et par son collecteur audit voyant (22) par l'intermédiaire d'une première résistance (17) de fourniture d'un courant de pilotage à un circuit DARLINGTON (19) en parallèle par ses sorties sur ledit voyant.

3. Dispositif adaptateur suivant la revendication 2, caractérisé en ce que la sortie (Q) dudit circuit de surveillance (11) est connectée à la base dudit premier transistor (16) par l'intermédiaire d'une seconde résistance (14) et d'une diode (15) de protection.

4. Dispositif adaptateur suivant la revendication 2 ou 3, caractérisé en ce que l'émetteur du circuit DARLINGTON (19) est à la masse (25) par l'intermédiaire d'une troisième résistance (24) et en ce qu'un second transistor (18) est connecté par son collecteur d'une part au collecteur dudit premier transistor (16), d'autre part à la base dudit circuit DARLINGTON (19) par son émetteur à la masse (25) et par sa base au point commun à l'émetteur du circuit DARLINGTON (19) et à ladite troisième résistance (24).

5. Dispositif adaptateur suivant la revendication 4, caractérisé par un condensateur (20) connecté entre les collecteurs desdits premier (16) et second (18) transistors d'une part et dudit circuit DARLINGTON (19) d'autre part.

## Patentansprüche

1. Elektronische Anpaßeinheit zum Verarbeiten diagnostischer Daten eines elektronischen Steuergerätes, der Art, die einen Mikrorechner (10) aufweist, der Signale (31—39) abgibt, entsprechend dem Funktionszustand von Peripherieschaltkreisen und ein periodisches Signal abgibt, entsprechend dem Funktionszustand des Mikrorechners, die einen Überwachungsschaltkreis (11—15) aufweist für den Funktionszustand des Mikrorechners, welcher das periodische Signal erhält und die eine Fehlerwarnanzeige (22) aufweist, die mit dem Mikrorechner (10) und dem Ausgang des Überwachschaltkreises (11—15) über einen Erregerschaltkreis (30) für die Anzeige (22) verbunden ist, welcher die Erregung der Anzeige (22) steuert, infolge des Abgebens eines Signals, das einem anomalen Funktionieren eines Peripherieschaltkreises entspricht oder durch Steuerung des Überwachungsschaltkreises (11—15) infolge seines Erfassens eines einem fehlerhaften Funktionieren des Mikrorechners entsprechenden Signals, dadurch gekennzeichnet, daß der Mikrorechner (10) einen ersten Ausgangskontakt (P$_{02}$) aufweist, der mit dem Erregerschaltkreis (30) verbunden ist und von dem die dem Funktionszustand der Peripherieschaltkreise entsprechenden Signale seriell abgegeben werden gemäß einer Sequenz mit vorgegebener Folge, derart, daß das Abgeben eines Fehlersignals in der Sequenz eine Erregung der Anzeige (22) bewirkt, die vom Betrachter als kontinuierlich wahrgenommen wird und daß ein zweiter Ausgangskontakt (P$_{16}$) mit dem Überwachungsschaltkreis (11—15) verbunden ist, über den der Mikrorechner (10) das periodische Signal abgibt und daß zum Schutz des Erregerschaltkreises der in ihm fließende Strom begrenzt ist und daß die Verbindung zwischen dem Ausgang des Erregerschaltkreises (30) und dem Eingang der Anzeige (22) einen Diagnoseanschluß (21) darstellt, an dem bei Abwesenheit von fehlerhaftem Funktionieren des Mikrorechners (10) die seriellen Signale (31—39) verfügbar sind, während die Erregung der Anzeige (22) durch den Erregerschaltkreis (30) unter der Steuerung des Überwachungsschaltkreises vorgeht und die Übermittlung der seriellen Signale (31—39) an den Diagnoseanschluß (21) verhindert.

2. Anpaßeinheit nach Anspruch 1, dadurch gekennzeichnet, daß der Erregerschaltkreis (30) einen ersten Transistor (16) aufweist, verbunden: mittels seiner Basis einerseits mit dem Ausgang (Q) des Überwachungsschaltkreises (11) und andererseits mit dem ersten Ausgangskontakt (P$_{02}$), mit seinem Emitter mit der Masse (25) und mit seinem Kollektor mit der Anzeige (22) mittels eines ersten Widerstandes (17) zur Erzeugung eines Überwachungsstroms für einen Darlington-Schaltkreis (19) parallel zu den Ausgängen der Anzeige.

3. Anpaßeinheit nach Anspruch 2, dadurch gekennzeichnet, daß der Ausgang (Q) des Überwachungsschaltkreises (11) mit der Basis des ersten Transistors (16) mittels eines zweiten Widerstandes (14) und einer Schutzdiode (15) verbunden ist.

4. Anpaßeinheit nach Anspruch 2 oder 3, dadurch gekennzeichnet, daß der Emitter des Darlington-Schaltkreises (19) mittels eines dritten Widerstandes (24) an der Masse (25) liegt und daß ein zweiter Transistor (18) mittels seines Kollektors einerseits mit dem Kollektor des ersten Transistors (16) und andererseits mit der Basis des Darlington-Schaltkreises (19) verbunden ist, mittels seines Emitters mit der Masse (25) und mittels seiner Basis mit einem dem Emitter des Darlington-Schaltkreises (19) und dem dritten Widerstand (24) gemeinsamen Punkt verbunden ist.

5. Anpaßeinheit nach Anspruch 4, gekennzeichnet durch einen Kondensator (20), der zwischen den Kollektoren des ersten Transistors (16) und des zweiten Transistors (18) einerseits und dem Darlington-Schaltkreis (19) andererseits geschaltet ist.

## Claims

1. An electronic adapter device of a diagnostic pick-up, for the data supplied by an electronic control circuit of the type comprising a microcomputer (10) emitting signals (31—39) representing the operating condition of peripheral circuits and a periodic circuit representing the operating condition of the microcomputer, a monitoring circuit (11—15) for monitoring the operating condition of the microcomputer receiving said periodic signal, and a defect signalling telltale (22) connected to the microcomputer (10) and to the output of the monitoring circuit (11—15) by means of a circuit (30) for lighting the telltale (22) controlling lighting of said telltale (22) in response to the emission of a signal representing an anomaly in operation of a peripheral circuit or under the control of the monitoring circuit (11—15) in response to detection by the latter of a signal representing an operating defect in the microcomputer, characterised in that said microcomputer (10) comprises a first output terminal ($P_{02}$) which is connected to said lighting circuit (30) and on which said signals (31—39) representing the operating condition of the peripheral circuits are emitted in series in a sequence having a predetermined recurrence such that the emission of a defect signal in said sequence causes the telltale (22) to be lit in a manner which is perceived as continuous by an observer, and a second output terminal ($P_{16}$) which is connected to the monitoring circuit (11—15) and on which the microcomputer (10) emits said periodic signal, and that to protect the lighting circuit the current which flows therein is limited, and that the connection of the output of the lighting circuit (30) to the input of the telltale (22) constitutes a diagnostic pick-up at which, in the absence of an operating defect in the microcomputer (10), said series signals (31—39) are available, while lighting of the telltale (22) by the lighting circuit (30) under the control of the monitoring circuit has priority and prevents said series signals (31—39) from being transmitted to the diagnostic terminal (21).

2. A device according to claim 1 characterised in that said lighting circuit (30) comprises a first transistor (16) which has its base connected on the one hand to the output (Q) of said monitoring circuit (11) and one the other hand to said first output terminal ($P_{02}$), its emitter to earth (25), and its collector to said telltale (22) by means of a first resistor (17) for supplying a pilot control current to a Darlington circuit (19) in parallel with its outputs to said telltale.

3. A device according to claim 2 characterised in that the output (Q) of said monitoring circuit (11) is connected to the base of said first transistor (16) by way of a second resistor (14) and a protection diode (15).

4. A device according to claim 2 or claim 3 characterised in that the emitter of the Darlington circuit (19) is connected to earth (25) by way of a third resistor (24) and that a second transistor (18) has its collector connected on the one hand to the collector of said first transistor (16) and on the other hand to the base of said Darlington circuit (19), its emitter connected to earth (25), and its base connected to the junction which is common to the emitter of the Darlington circuit (19) and to said third resistor (24).

5. A device according to claim 4 characterised by a capacitor (20) connected between the collector of said first and second transistors (16, 18) on the one hand and said Darlington circuit (19) on the other hand.

Fig:1

Fig:2

0 048 647